Europäisches Patentamt

European Patent Office

Office européen des brevets

(19)

(11) Numéro de publication: **0 089 269**

**B2**

(12) **NOUVEAU FASCICULE DE BREVET EUROPEEN**

(45) Date de publication du nouveau fascicule du brevet: **10.10.90**

(51) Int. Cl.⁵: **A 47 G 19/00,** B 29 C 33/44, A 23 G 3/00

(21) Numéro de dépôt: **83400454.1**

(22) Date de dépôt: **04.03.83**

(54) **Récipient en forme de coquille d'escargot et moule pour sa fabrication.**

(30) Priorité: **11.03.82 FR 8204131**

(43) Date de publication de la demande:
**21.09.83 Bulletin 83/38**

(45) Mention de la délivrance du brevet:
**10.12.86 Bulletin 86/50**

(45) Mention de la decision concernant l'opposition:
**10.10.90 Bulletin 90/41**

(84) Etats contractants désignés:
**AT BE CH DE GB IT LI LU NL SE**

(56) Documents cités:
BE-A- 378 497
CA-D- 47 745
DE-A-3 020 962
FR-A- 604 783
FR-A- 880 967
FR-A- 958 676
FR-A-1 095 738
FR-A-1 583 781
FR-A-2 180 534
FR-U- 182 852

FR-U- 800 896
FR-U- 801 363
GB-A-2 066 144
US-A-1 329 086
US-A-2 156 145
US-A-3 290 154
US-A-3 859 030
US-D- 13 909
US-D- 267 362

(73) Titulaire: **TORINO**
**62 rue Rohaut**
**F-80008 Amiens Cédex (FR)**

(72) Inventeur: **Petiot, Roger Louis**
**52 rue Croix Saint-Firmin**
**F-8000 Amiens (FR)**

(74) Mandataire: **Gorree, Jean-Michel et al**
**Cabinet Plasseraud 84, rue d'Amsterdam**
**F-75009 Paris (FR)**

EP 0 089 269 B2

Courier Press, Leamington Spa, England.

## Description

La présente invention concerne un récipient utilisable en cuisine pour recevoir une préparation culinaire à consommer et présentant, extérieurement, sensiblement la forme générale d'un coquille d'escargot, notamment d'une coquille d'escargot dit "de Bourgogne", ce récipient présentant une ouverture à sa partie supérieure (considérée dans la position d'utilisation du récipient) qui possède un contour indentique à celui formé virtuellement par l'intersection d'une coquille d'escargot réelle représentée par ledit récipient et du plan déterminé par le bord de l'ouverture réelle de ladite coquille réelle. L'invention concerne également un moule pour la fabrication d'un tel récipient.

Il existe à l'heure actuelle une demande croissante, en particulier de la part des préparateurs d'escargots, pour des coquilles d'escargots artificielles en raison d'un manque de coquilles naturelles.

En outre, la préparation des escargots nécessite un certain nombre de manipulations (en particulier, extractions, puis rencoquillage de l'animal respectivement avant et après sa préparation) qui sont compliquées par la forme particulière de la coquille. De même, au moment de la consommation, l'extraction de l'animal nécessite en général le recours à des ustensiles particuliers (pinces et fourchette à escargot) qui sont d'un maniement difficile pour les néophytes.

Pour tenter de remédier à ces problèmes, on a déjà eu l'idée de réaliser des récipients en forme de coquille d'escargot, tel que par exemple celui décrit dans le FR—A—095 738.

Toutefois, ces récipients connus ne constituent qu'une représentation assez approximative de la coquille d'un escargot aussi bien pour la forme que pour les dimensions, notamment lorsque ledit récipient est réalise en un matériau relativement fragile tel que la porcelaine ou la faïence.

En outre, ces récipients on toujours été considérés comme des pièces de vaiselle et traités en tant que telles, la stylisation de forme étant alors à prendre en ligne de compte en tant que critère décoratif, même si elle résultant d'impératifs technologiques dus à la forme complexe de la coquille rendant impossible une fabrication par des techniques de moulage conventionnelles.

Par allieurs, les deux modèles français no 80 0896 et 80 1363 montrent certes un récipient ayant extérieurement la forme générale d'une coquille d'escargot. Toutefois, cette forme est une interprétation de la forme d'une coquille réelle qui se rapproche plutôt de celle d'un escargot exotique dit "achatine" et elle n'offre aucune ressemblance avec la coquille réelle d'un escargot terrestre couramment utilisé en cuisine, tel que l'escargot dit "de Bourgogne". A fortiori, ce récipient ne présente pas les striures transversales caractéristiques de la coquille de l'escargot de Bourgogne. De plus, ce récipient connu possède des parois très épaisses, notamment au droit de la spirale: si l'on envisage de réaliser ce récipient en une matière consomable cuite, telle qu'un pâte cuite, l'épaisseur excessive empêche une cuisson satisfaisante à coeur. Enfin, il n'est pas indiqué dans ces documents, et il n'est pas possible de déduire de leur lecture, de quelle mainère un récipient en forme de coquille d'escargot pouvait être modulé de façon effective en très grande série en respectant le réalisme des formes et des dimensions d'une coquille réelle.

Malgré cela, il existe chez les utilisateurs (aussi bien les préparateurs d'escargots que les consommateurs) un besoin pour des coquilles d'escargots artificielles qui reproduisent une coquille naturelle avec la meilleure fidélité possible, essentiellement du reste pour procurer une satisfaction purement psychologique aux consommateurs.

L'invention a donc essentiellement pour but de procurer une telle coquille qui écarte les inconvénients mentionés plus haut, ainsi que les moyens matérials de fabriquer une telle coquille.

A ces fins, et selon un premier aspect de l'invention, ce récipient conforme à l'invention se caractérise en ce que, ce récipient étant moulé dans un moule en deux parties, la ligne de reccordement de ses deux portions moulées constitutives s'étend dans un plan médian formant un angle ($\alpha$) compris entre environ 70° et 80° avec le plan de son ouverture, en ce que ledit plan médian est sensiblement perpendiculaire à l'axe de la spirale de la coquille, et en ce que la ligne de raccordement s'étend d'avant en arrière, l'une des deux portions moulées contenant la totalité de la spirale de la coquille.

Un tel récipient permet donc de satisfaire la domande car il peut être facilement réalisé avec tous les détails souhaitables autorisant une reproduction aussi fidèle que possible d'une coquille naturelle, par exemple à partir d'un surmoulage d'une coquille naturelle, et, d'autre part, les manipulations de l'animal (rencoquillage après préparation et extraction au moment de la consommation) se trouvent grandement facilitées en raison de la suppression de la partie fermée présentée par la spirale dans une coquille naturelle et de l'absence de partie de paroi en surplomb. Il en résulte une cavité intérieure de forme simple facilitant non seulement les opérations susmentionnées, mais aussi le netoyage lorsque ce récipient est réutilisable. En outre, le récipient de l'invention peut servir à une présentation originale de préparations culinaires autres que des préparations d'escargots ou à base d'escargots.

Ce récipient peut être constitué en n'importe quel matériau pouvant être mis au contact de produits comestibles; en particulier, il est intéressant, au moins pour certaines applications, qu'il puisse être constitué en une matière comestible, par exemple à base de farine de blé, de maïs ou de sarrazin, qui supporte sans endommagement les températures du four. Il en résulte un agrément supplémentaire pour le consommateur en même temps que se trouve supprimée la nécessité du nettoyage réclamée par l'utilisation de coquilles-pièces de vaiselle constituées en un matériau non comestible.

Selon un second aspect de l'invention, un moule pour fabriquer, malgré sa forme complexe, un récipient conforme à l'invention comprend:

— deux éléments de moule, dans lesquels sont creusées respectivement deux empreintes pour les deux portions susmentionées du récipient, l'une de ces empreintes comportant la totalité de la spirale de la coquille, ces deux éléments de moule étant déplaçables l'un par rapport à susmentionée d'un angle compris entre environ 70° et 80° afin d'autoriser le démoulage du récipient.

Le recours à une fabrication par moulage autorise l'utilisation d'une grande diversité de matériaux constitutifs, consommables ou non, permet de diminuer les coûts de fabrication et autorise une production importante.

L'invention sera mieux comprise à la lecture de la description qui suit, dans laquelle on se réfère aux dessins annexés sur lesquels:

— la figure 1 est une vue en perspective, de trois quarts arrière et d'en haut, d'un récipient agencé conformément à l'invention,

— la figure 2 est une vue en bout, de face, du récipient de la figure 1 en position renversé,

— la figure 3 est une vue en coupe transversale d'une partie de moule permettant de fabriquer le récipient des figures 1 et 2, et

— la figure 4 est une vue schématique partielle isométrique, avec partie arrachée, de la partie de moule de la figure 3 en illustrant le fonctionnement.

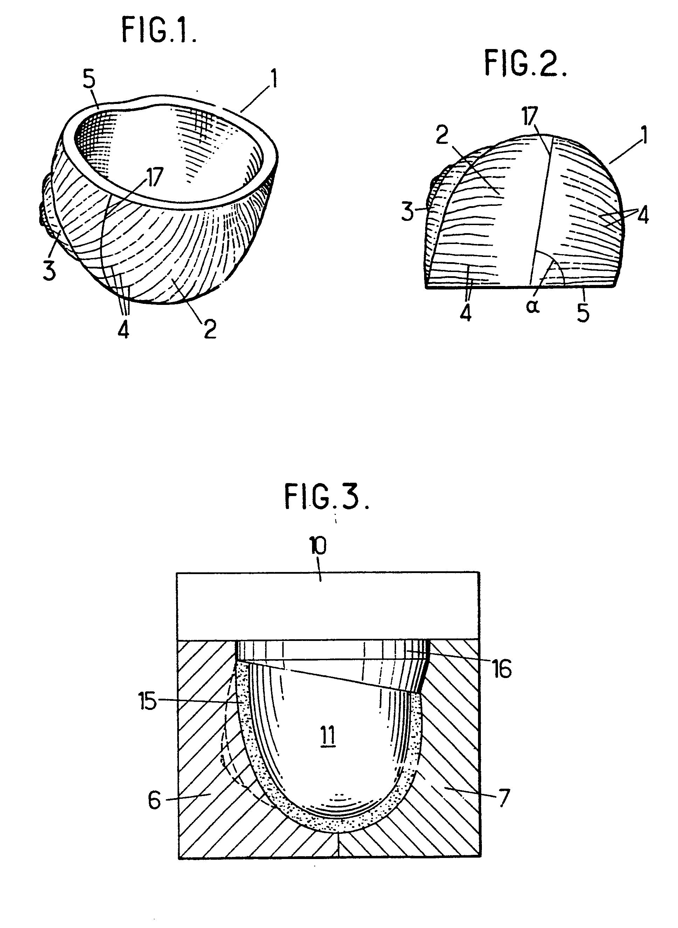

En se reportant tout d'abord aux figures 1 et 2, le récipient 1 de l'invention présente, extérieurement, la forme générale d'une coquille d'escargot; de préférence, mais non obligatoirement, ce récipient correspond par sa taille à une coquille d'escargot relativement gros, par exemple la taille d'un "gros gris" ou d'un "Bourgogne".

La surface extérieure 2 du récipient comporte, comme représenté sur les figures 1 et 2, toutes les convolutions de la spirale 3 et tous les reliefs 4 que peut posséder la surface extérieur d'une véritable coquille d'escargot.

L'ouverture 5 du récipient 1 épouse le contour de la coquille sensiblement dans un plan contenant le bord de l'ouverture d'une coquille véritable; autrement dit, le récipient de l'invention correspond à une coquille d'escargot tronquée dans un plan contenant approximativement le bord de l'ouverture d'une coquille réelle, l'ouverture 5 du récipient étant consituée par la section de la coquille par ledit plan.

Bien entendu, intérieurement le récipient est dégagé de toutes les cloisons que forme l'enroulement spiralé d'une coquille véritable. Il en résulte une cavité intérieure de forme simple qui facilite au maximum le remplissage (par rencoquillage de l'animal) et la consommation, aussi bien que le nettoyage de la coquille.

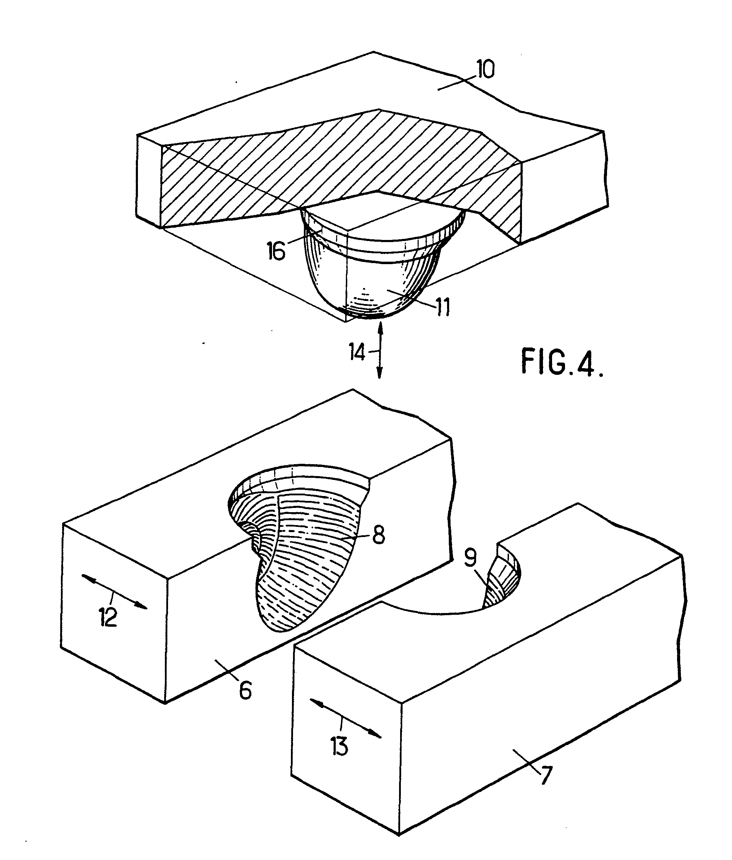

Compte tenu due nombre très élevé de récipients en forme de coquilles d'escargots qui doit être produit, il est avantageux que la fabrication de ces récipients soit effectuée par moulage. En raison de la forme relativement complexe de la surface extérieure du récipient, et en particulier en raison de la présence de la spirale 3, le moule est composé de trois éléments séparables, comme cela apparaît aux figures 3 et 4.

Deux parties de moule inférieure 6 et 7 portent respectivement deux empreintes 8 et 9 qui, réunies (figure 3), constituent un matrice de la surface extérieure de la coquille; une troisième partie de moule 10, située au-dessus des deux parties 6 et 7, porte un noyau 11 dont la forme correspond à la forme inférieure du récipient 1 à constituer.

Les trois parties de moule 6, 7 et 10 sont mobiles les unes par rapport aux autres selon des trajectoires rectilignes, les parties 6 et 7 étant déplaçables horizontalement (doubles flèches 12 et 13 respectivement) et la partie 10 étant déplaçable veticalement (double flèche 14) entre, d'une part, une position de moulage dans laquelle ces trois parties sont réunies (figure 3) pour former une cavité de moulage dans laquelle est introduit le matériau de moulage 15 et, d'autre part, un position de démoulage dans laquelle ces trois partie sont mutuellement écartées (figure 4) pour autoriser le prévèlement du récipient moulé.

Pour que le récipient puisse être démoulé sans endommagement, les deux empreintes 8 et 9 sont creusées dans les parties 6 et 7 de moule de manière telle que l'une seuelement des empreintes (8 sur les figures) comporte la forme de la spirale de la coquille et que l'axe de cette spirale soit dirigé sensiblement parallèlement à la direction de déplacment (double flèche 12) de la partie 6 de moule.

En outre, intérieurement le récipient possède une surface relativement lisse et sans dépouille. Toujours dans le souci d'un démoulage sans endommagement due récipient moulé (sortie du noyau 11 selon la flèche 14), les empreintes 8 et 9 sont creusées dans les parties de moule 6, 7 de manière telle que le déplacement 14 du noyau puisse s'effecteur sensiblement perpendiculairement aux déplacements 12, 13 des parties 6, 7; autrement dit, la matrice 8—9 est inclinée dans la partie de moule 6—7 et le noyau 11 est monté sur la partie de moule 10 par l'intermédiaire d'une embase inclinée 16.

Ces conditions de fabrication font que la surface extérieure du récipient présente une ligne de raccordement 17 des deux portions moulées du récipient (correspondant au plan de jonction des deux parties de moule 6 et 7) qui s'étend d'avant en arrière dans un plan formant, avec le plan de l'ouverture 5, un angle α comprise entre environ 70° et 80°.

Le récipient peut être moulé en toute matière appropriée, soit une matière rigide (matière synthétique, faïence, etc.) pour constituer un récipient réutilisable ou à jeter, soit de préférence une matière comestible (par exemple à base de farine de blé, de maïs ou de sarrazin) pur être consommé en même temps que la préparation culinaire qu'il contient.

Bien que, comme indiqué précédemment, le récipient présente avantageusement uen forme extérieure reproduisant le plus fidèlement possible celle d'une coquille d'escargot véritable, on

peut aussi envisager de lui donner une forme stylisée, simplifiant de préférence le processus de démoulage.

Pour ce qui concerne le dispositif de moulage, un seul moule a été représenté et décrit par souci de clarté; mais bien entendu, afin d'obtenir une cadence de production coforme aus besoins, chaque dispositif de moulage comporte une pluralité de moules côte à côte et plusieurs dispositifs de moulage réunis peuvent être traités au four simultanément.

## Revendications

1. Récipient (1) utilisable en cuisine pour recevoir une préparation culinaire à consommer et présentant, extérieurement, sensiblement la forme générale d'une coquille d'escargot, notamment d'une coquille d'escargot dit ''de Bourgogne'', ce récipient présentant une ouverture (5) à sa partie supérieure (considérée dans la position d'utilisation du récipient) qui possède un contour indentique à celui formé virtuellement par l'intersection d'une coquille d'escargot réelle représentée par ledit récipient et du plan déterminé par le bord de l'ouverture réelle de ladite coquille réelle, caractérisé en ce que, ce récipient étant moulé dans un moule en deux parties, la ligne de raccordement (17) de ses deux portions moulées constitutives s'étend dans un plan médian formant un angle (α) compris entre environ 70° et 80° avec le plan de son ouverture (5), en ce que ledit plan médian est sensiblement perpendiculaire à l'axe de la spirale (3) de la coquille, et en ce que la ligne de raccordement (17) s'étend d'avant en arrière, l'une des deux portions moulées contenant la totalité de la spirale (3) de la coquille.

2. Récipient selon la revendication 1, caractérisé en ce qu'il est constitué en une matière comestible.

3. Moule pour fabriquer au moins un récipient selon la revendication 1 ou 2, caractérisé en ce qu'il comprend:

— deux éléments de moules (6, 7), dans lesquels sont creusées respectivement deux empreintes (8, 9) pour les deux portions susmentionnées du récipient (1), l'une (8) de ces empreintes comportant la totalité de la spirale (3) de la coquille, ce deux éléments de moule étant déplaçables (doubles flèches 12, 13) l'un par rapport à l'autre selon une première direction approximativement parallèle à l'axe de la spirale.

— un troisième de moule (10) portant un moyau de moulage (11), ce troisème élément étant mobile, par rapport aux deux susdits éléments de moule, selon une seconde direction (double flèche 14) sensiblement perpendiculaire à la susdite première direction,

— les empreintes susmentionnées étant creusées respectivement dans les deux premiers éléments de moule de manière telle et le noyau étant porté par le troisiéme élément de moule de manière telle que le plan contenant l'ouverture du récipient soit incliné avec la seconde direction susmentionée d'un angle compris entre environ 70° et 80° afin d'autoriser le démoulage du récipient.

4. Moule selon la revendication 3, caractérisé en ce qu'il comprend plusieurs empreintes et un nombre égal de noyaux pour fabriquer simultanément une pluralité de récipients.

## Patentansprüche

1. In der Küche verwendbares Gefäß zur Aufnahme einer zum Verzehr bestimmten kulinarischen Zubereitung und äußerlich weitgehend in Form eines Schneckenhauses, insbesondere einer sogenannten ''Burgunder'' Weinbergschnecke, mit einer Öffnung (5) in seinem Oberteil (in der Gebrauchslage des Gefäßes gesehen), deren Kontur mit jener identisch ist, die sich virtuell durch den Schnitt eines echten, von diesem Gefäß gebildeten Schneckenhauses in der Ebene ergibt, die durch den Rand der echten Öffnung eines echten Schneckenhauses bestimmt ist, dadurch gekennzeichnet, daß, da dieses Gefäß in einer zweiteiligen Form hergestellt ist, sich die Nahtlinie (17) der beiden geformten Teile in einer Mittelebene erstreckt, die mit der Ebene seiner Öffnung (5) einen Winkel (α) zwischen etwa 70° und 80° einschließt, daß diese Mittelebene weitgehend senkrecht auf der Achse der Spirale (3) des Schneckenhauses ist, und daß sich die Nathlinie von vorn nach hinten erstreckt, wobei der eine der beiden geformten Teile die gesamte Spirale (3) des Schneckenhauses aufweist.

2. Gefäß nach Anspruch 1, dadurch gekennzeichnet, daß es aus einem eßbaren Material besteht.

3. Form zum Herstellen wenigstens eines Gefäßes nach Anspruch 1 oder 2, dadurch gekennzeichnet, daß sie aufweist:

— zwei Formelemente (6, 7), in denen zwei Vertiefungen (8, 9) für die beiden erwähnten Teile des Gefäßes (1) ausgehoben sind, von denen die eine Vertriefung (8) die gesamte Spirale (3) des Schneckenhauses aufweist, wobei die beiden Formelemente relative zueinander in einer ersten Richtung (Doppelpfeile 12, 13) annährend parallel zur Achse der Spirale verschiebbar sind, und

— ein drittes Formelement (10), das einen Formkern trägt un relativ zu den erwähnten beiden Formelementen in einer zweiten Richtung (Doppelpfeil 14) weitgehend senkrecht zur erwähnten ersten Richtung bewegbar ist,

— wobei die erwähnten Vertiefungen in den beiden ersten Formelementen in der Weise ausgehoben sind und der Formkern von dem dritten Formelement in der Weise getragen wird, daß die Ebene, in der die Öffnung des Gefäßes liegt, gegenüber der erwähnten zweiten Richtung unter einem Winkel geneigt ist, der zwischen etwa 70° und 80° liegt, um das Entfernen des Gefäßes zu ermöglichen.

4. Form nach Anspruch 3, dadurch gekennzeichnet, daß sie mehrere Vertiefungen und ebensoviele Formkerne zum gleichzeitigen Herstellen mehrerer Gefäße aufweist.

## Claims

1. A receptacle (1) usable in cooking for receiving a culinary preparation to be consumed and having, outwardly, substantially the general shape of a snail shell, more especially of a so-called "Burgundy" snail shell, said receptacle having an opening (5) at it upper part (when considered in the use position of the receptacle) which has an outline identical to those virtually made by the intersection of a real snail shell represented by said receptacle and the plane definited by the edge of the real opening of a real shell, characterized in that, said receptacle being molded in a two-part mold, the joining line (17) between its two component molded parts extends in median plane forming an angle (α) between about 70° and 80° with the plane of its opening (5), in that said median plane is substantially perpendicular to the axis of the spiral (3) of the shell, and in that this joining line extends from the front rearwardly, one of the two molded portions containing the whole of the spiral (3) of the shell.

2. The receptacle according to claim 1, characterized in that it is made from an edible material.

3. A mold for producing at least one receptacle in accordance with claim 1 or 2, characterized in that it comprises:

— two mold elements (6, 7) in which respectively two casts (8, 9) for the above mentioned portions of the receptacle (1) are formed, one (8) of these casts comprising the whole of the spiral (3) of the shell, these two mold elements being movable (double arrows 12, 13) with respect to each other in a first direction approximately parallel to the axis of the spiral,

— a third mold element (10) carrying a molding core (11), this third element being movable, with respect to said two mold elements, in a second direction (double arrow 14) substantially perpendicular to said first direction,

— the above-mentioned casts being grooved respectively in the first two mold elements such, and the core being carried by the third mold element such, that the plane containing the opening of the receptacle is sloping to the second above-mentioned direction by an angle between about 70° and 80° so as to allow the receptacle to be removed from the mold.

4. The mold according to claim 3, characterized in that it comprises several casts and an equal number of cores for producing simultaneously a plurality of receptacles.

FIG.1.

FIG.2.

FIG.3.

FIG.4.